# EUROPÄISCHE PATENTSCHRIFT

(11) **EP 1 363 226 B1**
(45) Veröffentlichungstag und Bekanntmachung des Hinweises auf die Patenterteilung: **19.04.2006**
(21) Anmeldenummer: 02010932.8
(22) Anmeldetag: 16.05.2002
(51) Int. Cl.: G06K 7/00

(54) **Kartenlesevorrichtung**
Card reader
Lecteur de cartes

(43) Veröffentlichungstag der Anmeldung: 19.11.2003
(73) Patentinhaber: Compagnie Industrielle et Financiere d'Ingenierie Ingenico, 92816 Puteaux Cedex (FR)
(72) Erfinder: Yang, Chuntei, 22339 Hamburg (DE); Schröder, Manfred, 22339 Hamburg (DE); Compain, Gérard, 92816 Puteaux Cedex (FR)
(74) Vertreter: Hirsch & Associés

(56) Entgegenhaltungen:
- DE-A- 4 402 229
- DE-A- 10 054 890
- US-A- 5 036 184
- US-A1- 2001 052 546

## Beschreibung

Die vorliegende Erfindung betrifft eine Kartenlesevorrichtung mit Schreib- und/oder Leseeinheiten für wenigstens zwei verschiedene Speichereinheiten von Karten für den bargeldlosen Zahlungsverkehr, wobei die Schreib-/Leseeinheiten für die kartenseitigen Speichereinheiten im Bereich eines schlitzförmigen Aufnahmeraumes für die Karte angeordnet sind, in welchen die Karte einschiebbar ist.

Gattungsgemäß Kartenlesevorrichtungen sind aus dem Stand der Technik dem Grunde nach bekannt. Solche Kartenlesevorrichtungen werden in Automaten unterschiedlicher Art für bargeldlose Zahlungsabwicklungen eingesetzt, worunter auch Geldausgabemaschinen, Kartenzahlungsstationen in Geschäften, Tankstellen sowie Kartenaufladegeräte gehören, in welchen auf eine Karte ein Guthaben aufgespeichert wird. Weiterhin werden solche Karten für unterschiedliche Einsatzzwecke wie beispielsweise Telefonzellen usw. verwendet. Bei den Karten handelt es sich vorzugsweise um in wesentlichen rechteckförmige Kunststoffkarten, auf welchen Speichereinheiten angeordnet sind. Dazu gehören Magnetstreifen, Speicherchips, in jüngster Zeit aber auch kleine Mikrorechnerbausteine für interaktive Kommunikation und dergleichen, welche im Rahmen der Erfindung ebenfalls unter dem Begriff Speichereinheiten geführt werden sollen.

Es ist im Stand der Technik bekannt, daß solche Karten, beispielsweise Kreditkarten, Scheckkarten, Telefonkarten und dergleichen, mit wenigstens zwei verschiedenen Speichereinheiten versehen sind. Gängig sind derzeit Kombinationen von Magnetstreifen und Speicherchips, aber auch andere Speichereinheitenkombinationen sowie Kombinationen von mehr als zwei Speichereinheitentypen liegen im Rahmen der Erfindung.

Während Speichereinheiten wie Speicherchips eine im wesentlichen ortsfeste, ruhende Kontaktierung erforderlich machen, machen Speichereinheiten wie Magnetstreifen Relativbewegungen zwischen Speichereinheit und Schreib-/Leseeinheit des Kartenlesegerätes erforderlich.

Je nach Anwendungsgebiet und Einsatzzweck umfassen die Kartenlesegeräte Leseköpfe, Schreibköpfe oder kombinierte Schreib-/Leseköpfe. Im Rahmen der vorliegenden Anmeldung werden alle drei Möglichkeiten der Einfachheit halber unter dem Oberbegriff "Schreib-/Leseeinheit" zusammengefaßt.

Zur bestimmungsgemäßen Kartennutzung wird nun die Karte in das Kartenlesegerät eingeführt. Dabei ist es im Stand der Technik üblich, daß die Karte weitestgehend vollständig in einen schlitzartigen Aufnahmeraum eingeschoben oder eingezogen wird. Meistens folgt auf ein anfängliches Einsetzen ein automatischer Einzugsvorgang. Die Karte wird in eine vorgegebene Endposition bewegt und je nach Kartennutzungsvorgang die eine oder die andere Speichereinheit, gegebenenfalls auch beide, kontaktiert und ausgelesen und/oder beschrieben. Dabei kann der Magnetstreifen bereits während des Einzugsvorganges über den Schreib-/Lesekopf - oder einen einzelnen Schreibkopf bzw. Lesekopf - bewegt und dabei ausgelesen oder beschrieben werden. In jedem Fall jedoch wird im Stand der Technik die Karte in eine einzige Schreib/Leseendposition bewegt und in dieser Position gegebenenfalls auch das Kontaktfeld des Speicherchips für den Datenaustausch kontaktiert.

Insbesondere bei solchen Kartenlesegeräten mit automatischem Karteneinzug handelt es sich bei der Einzugs- und Auswurfeinheit um die einzige mechanische Einheit, die auch entsprechend anfällig ist. Da Karten in einem breiten Spektrum Umwelteinflüssen ausgesetzt sind, beispielsweise fettigen Fingern, Staub, Wärme/Kälteeinflüssen und dergleichen, und die Einzugs-/Auswurfeinheiten der Kartenlesegeräte üblicherweise über Breitgummis auf die Karten einwirken, kommt es hier zu relativ schnellen Abnutzungsvorgängen. Es besteht somit ein Bedarf daran, die Kartentransportvorgänge innerhalb des Kartenlesegerätes auf ein Minimum zu reduzieren.

US-A-5 036 184 offenbart eine Vorrichtung gemäß den Merkmalen des Oberbegriffes von Anspruch 1.

Ausgehend vom vorbeschriebenen Stand der Technik liegt der vorliegenden Erfindung die **Aufgabe** zugrunde, ein Kartenlesegerät der gattungsgemäßen Art dahingehend weiterzubilden, daß die Anzahl der Kartentransportvorgänge innerhalb des Kartenlesegerätes reduziert und damit der Wartungs- und Reparaturaufwand verringert und die Standzeiten entsprechender Kartentesegeräte veriängert werden.

Die Erfindung ist gegenstand der unabhängigen Ansprüche.

Zur technischen **Lösung** dieser Aufgabe wird mit der Erfindung vorgeschlagen, daß die Schreib-/Leseeinheiten derart positioniert sind, daß sich wenigstens zwei Einschubpositionen für die Karte in den schlitzförmigen Aufnahmeraum ergeben, denen jeweils eine Schreib-/Lesekommunikation mit wenigstens einer kartenseitigen Speichereinheit zugeordnet ist.

Mit der erfindungsgemäßen Lösung ist es nunmehr möglich, bei Kartennutzungsvorgängen unterschiedliche Einschubpositionen vorzusehen und damit auch Kartennutzungen ohne ein Einziehen der Karte ermöglichen. Dadurch wird die Anzahl der Einzugs- und Auswurfvorgänge erheblich reduziert.

Erfindungsgemäß sind Einschubpositionen für ruhende Kontaktierungen, beispielsweise kartenseitige Speicherchips, vorgesehen sowie Einschubpositionen bzw. Schreib-/Lesekommunikationsvorgänge, bei welchen eine Relativbewegung zwischen Schreib-/Lesekopf und beispielsweise einem Magnetstreifen erfolgt. Gemäß einem vorteilhaften Vorschlag der Erfindung ist für jede kartenseitige Speichereinheit eine andere Einschubposition vorgesehen. Es können also nach dem Einschieben einer Karte in die schlitzförmige Aufnahme der Reihe nach unterschiedliche Positionen vorgesehen sein, an welchen jeweils andere Speichereinheiten der Karte ausgewertet werden. Gemäß einem vorteilhaften Vorschlag der Erfindung kann nahe dem Einschubende des schlitzartigen Aufnahmeraumes eine erste kontaktierende Einschubposition vorgesehen sein. Es kann somit direkt an einer Vorderkante des schlitzartigen Aufnahmeraumes die Kontaktstelle für die ruhende Kontaktierung beispielsweise eines Speicherchips vorgesehen sein. Eine Bedienperson schiebt ihre Karte ein bis zu einer ersten Raststelle. An dieser kann nun der Speicherchip kontaktiert werden. Gemäß einem vorteilhaften Vorschlag der Erfindung wird an einer Einschubposition das Vorhandensein einer entsprechenden Speichereinheit überprüft. Ist die Speichereinheit vorhanden, kann sie genutzt werden. Ist sie nicht vorhanden, erfolgt ein Einziehen oder Einschieben in die nächste Einschubposition usw.

In vorteilhafter Weise kann gemäß der Erfindung eine Wahleinheit zur Nutzung einer entsprechenden Speichereinheit vorgesehen sein. Dies kann im Vorfeld oder im Ablauf erfolgen. Erreicht beispielsweise eine Karte die erste Einschubposition und ist eine entsprechende Speichereinheit vorhanden, kann der Nutzer befragt werden, ob er diese nutzen möchte. Verneint er, kann die Karte in die zweite Einschubposition vorgeschoben oder eingezogen werden. Hierdurch wird es möglich, Karten mit mehreren Speichereinheiten für unterschiedliche Zwecke auf unterschiedliche Weise zu nutzen und dies zugleich noch der Steuerung der Bedienperson zu überlassen.

Gemäß einem weiteren vorteilhaften Vorschlag der Erfindung weist die Kartenlesevorrichtung eine Einzugseinheit auf, welche ab einer ersten Position die Karte in den schlitzförmigen Aufnahmeraum einzieht. Vorteilhafterweise umfaßt die Einzugseinheit eine Vorrichtung zum Klemmen der Karte, so daß die Karte relativ zur Einzugseinheit festsitzt und in den Aufnahmeraum eingezogen bzw. aus diesem herausgeschoben werden kann. Gemäß einem besonders vorteilhaften Vorschlag der Erfindung weist die Einzugseinheit einen Spindelantrieb auf. Hierdurch erübrigen sich Führungs- und Antriebsgummis und dergleichen und der Verschleiß wird auf ein Minimum reduziert. Auch hierdurch wird die Standzeit erheblich verlängert.

In besonders vorteilhafter Weise kann vorgesehen sein, daß die Klemmvorrichtung der Einzugseinheit eine Kontaktierungseinheit zur Kontaktierung einer kartenseitigen Speichereinheit umfaßt.

Mit der Erfindung wird eine einfach realisierbare Lösung zur Vermeidung unnötiger Einzugs- und Auswurfvorgänge bei Kartenlesevorrichtungen vorgeschlagen. Hierdurch verringert sich der Wartungs- und Reparaturaufwand erheblich und es Vergrößert sich die Standzeit signifikant. Dies wird noch verbessert durch die Verwendung eines entsprechenden Spindelantriebs.

Weitere Vorteile und Merkmale der Erfindung ergeben sich aus der folgenden Beschreibung anhand der Figuren. Dabei zeigen:
- Fig. 1: eine schematische explosionsartige Seitenansicht eines Ausführungsbeispiels der Erfindung in einer ersten Einschubposition und
- Fig. 2: eine Darstellung gemäß Fig. 1 in einer zweiten Einschubposition.

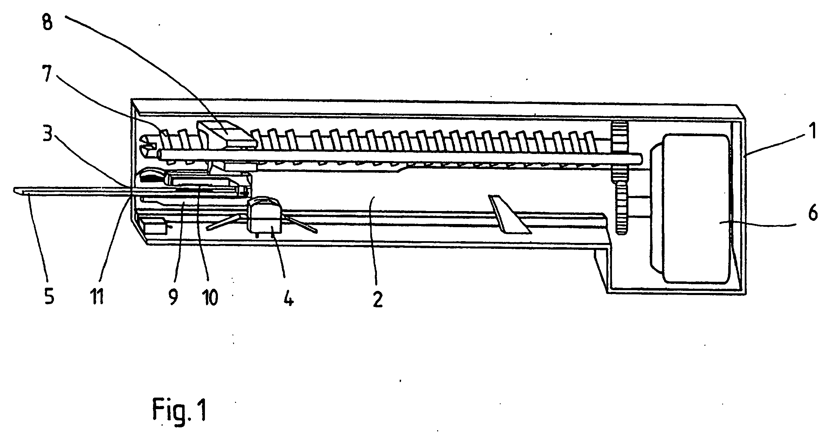

Eine Kartenlesevorrichtung 1 weist im gezeigten Ausführungsbeispiel einen schlitzförmigen Aufnahmeraum 2 auf. Dieser Aufnahmeraum ist über einen Schlitz 3 in einer frontseitigen Wand zugänglich. Im Inneren ist ein Schreib-/Lesekopf 4 für einen auf einer Karte angeordneten Magnetstreifen positioniert. Eine mit 5 bezeichnete Karte ist gemäß Fig. 1 in eine erste Einschubposition in den Schlitz 3 eingeführt. In diesem Zustand befindet sich ein nicht sichtbarer, kartenseitiger Speicherchip in Kontaktverbindung mit einer Speicherchipkontakteinrichtung 10. Diese Kontakteinrichtung 10 ist in einem Schlitten 9 angeordnet, an welchem eine über eine Nockenbahn geführte Klemmzunge 11 befestigt ist. In dieser Einschubposition ist der Speicherchip in Lese-/Schreibkontakt, ohne daß ein weiterer Kartentransport stattfindet.

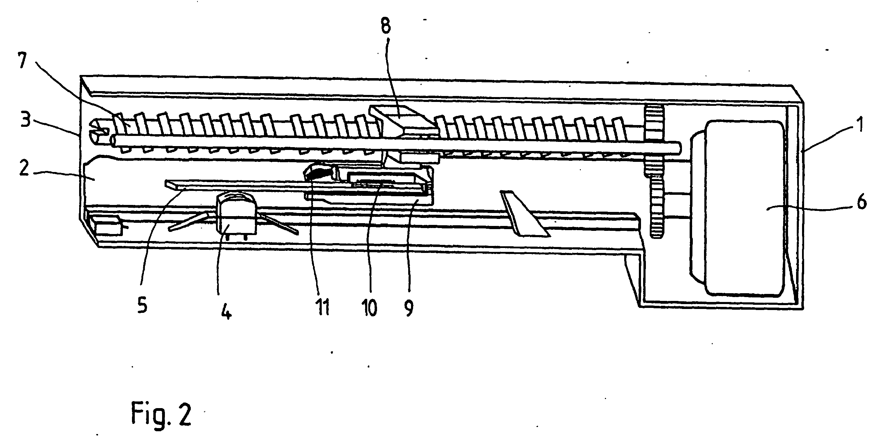

Soll nun ein weiterer Transport stattfinden, wird über einen Motor 6 eine Spindel 7 in Drehung versetzt und bewegt einen Spindelwagen 8, an welchem der Schlitten 9 befestigt ist. Die Klemmzunge 11 wird über die Nockenbahn die Karte 5 klemmend auf diese gepreßt und die Karte wird mit ihrem nicht sichtbaren Magnetstreifen über den magnetischen Schreib-/Lesekopf 4 geführt und durch die Relativbewegung ausgelesen bzw. beschrieben. Zur Ausgabe der Karte wird die Spindel in die andere Richtung in Drehung versetzt und die Karte wieder ausgeschoben, bis von der in Fig. 2 gezeigten Position die Karte wieder die in Fig. 1 gezeigte Position erreicht hat.

Das beschriebene Ausführungsbeispiel dient nur der Erläuterung und ist nicht beschränkend.

### Bezugszeichenliste

- 1: Kartenlesevorrichtung
- 2: Aufnahmeraum
- 3: Schlitz
- 4: Schreib-/Lesekopf / magnetisch
- 5: Karte
- 6: Motor
- 7: Spindel
- 8: Spindelwagen
- 9: Schlitten
- 10: Kontaktkopf/Speicherchip
- 11: Klemmzunge

## Patentansprüche

1. Kartenlesevorrichtung (1) mit zwei Schreib- und/oder Leseeinheiten (10; 4) für zwei verschiedene Speichereinheiten von Karten (5) für den bargeldlosen Zahlungsverkehr,
wobei die Schreib- und/oder Leseeinheiten für die kartenseitigen Speichereinheiten im Bereich eines schlitzförmigen Aufnahmeraumes für die Karte angeordnet sind, in welchen die Karte einbringbar ist, und
wobei die Schreib- und/oder Leseeinheiten derart positioniert sind, daß sich zwei Einschubpositionen für die Karte in dem schlitzförmigen Aufnahmeraum ergeben, denen jeweils eine Schreib-und/oder Lesekommunikation mit einer kartenseitigen Speichereinheit zugeordnet ist, und
wobei die erste Schreib- und/oder Leseeinheit (10) für die ruhende Kontaktierung einer kartenseitigen Speichereinheit ausgelegt ist, und
die zweite Schreib-und/oder Leseeinheit (4) für eine relativ bewegte Kontaktierung mit einem kartenseitigen Magnetstreifen ausgelegt ist,
**dadurch gekennzeichnet, daß**
die erste Einschubposition durch eine entsprechende Anordnung der ersten Schreib- und/oder Leseeinheit (10) direkt an der Vorderkante des schlitzartigen Aufnahmeraumes vorgesehen ist.

2. Kartenlesevorrichtung nach Anspruch 1, **dadurch gekennzeichnet, daß** die erste Schreib- und/oder Leseeinheit für Speicherchips geeignet ist.

3. Kartenlesevorrichtung nach Anspruch 1, **dadurch gekennzeichnet, daß** die Karte nur teilweise in den Aufnahmeraum eingesetzt werden muß.

4. Kartenlesevorrichtung nach einem der vorhergehenden Ansprüche, **dadurch gekennzeichnet, daß** diese bei Erreichen einer für eine Schreib/Lesekommunikation vorgesehenen Einschubposition das Vorhandensein einer entsprechenden kartenseitigen Speichereinheit überprüft.

5. Kartenlesevorrichtung nach einem der vorhergehenden Ansprüche, **dadurch gekennzeichnet, daß** diese eine Einzugsvorrichtung für die Karte aufweist.

6. Kartenlesevorrichtung nach Anspruch 5, **dadurch gekennzeichnet, daß** die Einzugsvorrichtung eine Vorrichtung zum Klemmen der Karte aufweist.

7. Kartenlesevorrichtung nach Anspruch 5, **dadurch gekennzeichnet, daß** die Einzugsvorrichtung einen Spindelantrieb umfaßt.

8. Kartenlesevorrichtung nach einem der vorhergehenden Ansprüche, **dadurch gekennzeichnet, daß** diese eine Wahleinheit zur Bestimmung der für eine Schreib-/Lesekommunikation vorgesehenen Speichereinheit aufweist.

9. Kartenlesemethode für Karten, die einen Speicherchip und einen Magnetstreifen besitzen, wobei die Karte in einen schlitzförmigen Aufnahmeraum eingeschoben ist, **dadurch gekennzeichnet, daß**
die Karte in einer ersten Position direkt an der Vorderkante des schlitzförmigen Aufnahmeraumes positioniert ist, wo der Speicherchip gelesen werden kann,
und daß, wenn das Lesen des Speicherchips nicht genügt, die Karte von der ersten Position weiter in Richtung des Aufnahme vaums transportiert wird, so daß der Magnetstreifen gelesen werden kann.

## Claims

1. Card reading device (1) with two writing and/or reading units (10; 4) for two different storage units of cards (5) for cashless payment transactions, wherein the writing and/or reading units for the storage units on the card side are arranged in the area of a slot-shaped receiving cavity for the card, into which the card can be inserted, and
wherein the writing and/or reading units are positioned so that two insertion positions are created for the card in the slot-shaped receiving cavity, to which one writing and/or reading communication is assigned each with a storage unit on the card side, and
wherein the first writing and/or reading unit (10) is embodied for the dead contacting of a storage unit on the card side, and
the second writing and/or reading unit (4) is embodied for a relatively moved contacting with a magnetic strip on the card side,
**characterized in that**
the first insertion position is provided by means of a respective arrangement of the first writing and/or reading unit (10) directly at the front edge of the slot-shaped receiving cavity.

2. The card reading device according to claim 1, **characterized in that** the first writing and/or reading unit is suitable for memory chips.

3. The card reading device according to claim 1, **characterized in that** the card needs to be inserted into the receiving cavity only partially.

4. The card reading device according to one of the previous claims, **characterized in that** once the insertion position provided for a writing/reading communication has been achieved, the same will check for the existence of a corresponding storage unit on the card side.

5. The card reading device according to one of the previous claims, **characterized in that** the same has a retracting device for the card.

6. The card reading device according to claim 5, **characterized in that** the retracting device has a device for the clamping of the card.

7. The card reading device according to claim 5, **characterized in that** the retracting device comprises a spindle drive.

8. The card reading device according to one of the previous claims, **characterized in that** the same has a selection unit for the determination of the storage unit provided for a writing/reading communication.

9. Method for reading cards having a memory chip and a magnetic strip, wherein the card is inserted into a slot-shaped receiving cavity, **characterized in that** in a first position, the card is positioned directly at the bottom edge of the slot-shaped receiving cavity, where the memory chip can be read, and that in case the reading of the memory chip does not suffice, the card is transported further from the first position in the direction of the receiving cavity so that the magnetic strip can be read.

## Revendications

1. Lecteur de carte (1) comprenant deux unités d'écriture et/ou de lecture (10 ; 4) pour deux unités de mémoire différentes de cartes (5), pour la circulation payante sans argent liquide, les unités d'écriture et/ou de lecture pour les unités de mémoire côté carte étant disposées dans la zone d'un espace de logement en forme de fente pour la carte, dans lequel la carte est susceptible d'être insérée, et
les unités d'écriture et/ou de lecture sont positionnées de manière que l'on obtienne deux positions d'insertion pour la carte dans l'espace de logement en forme de fente, positions à chacune desquelles est associée une communication en écriture et/ou en lecture avec une unité de mémoire située côté carte, et
dans lequel une première unité d'écriture et/ou de lecture (10) est conçue pour l'établissement d'un contact stationnaire d'une unité mémoire située côté carte, et
la deuxième unité d'écriture et/ou de lecture (4) est conçue pour l'établissement d'un contact à mobilité relative avec une borne magnétique côté carte,
**caractérisé en ce que** la première position d'insertion est prévue au moyen d'un agencement correspondant de l'unité d'écriture et/ou de lecture (10), directement sur le bord avant de l'espace de logement en forme de fente.

2. Lecteur de carte selon la revendication 1, **caractérisé en ce que** la première unité d'écriture et/ou de lecture convient pour des puces à mémoire.

3. Lecteur de carte selon la revendication 1, **caractérisé en ce que** la carte ne doit être insérée que partiellement dans l'espace de logement.

4. Lecteur de carte selon l'une des revendications précédentes, **caractérisé en ce que**, à l'atteinte d'une position d'insertion prévue pour une communication en écriture/lecture, celui-ci vérifie la présence d'une unité de mémoire côté cartes correspondante.

5. Lecteur de carte selon l'une des revendications précédentes, **caractérisé en ce que** celui-ci présent un dispositif d'introduction pour la carte.

6. Lecteur de carte selon la revendication 5, **caractérisé en ce que** le dispositif d'introduction présente un dispositif pour serrer la carte.

7. Lecteur de carte selon la revendication 5, **caractérisé en ce que** le dispositif d'introduction comprend un entraînement à broche.

8. Lecteur de carte selon l'une des revendications précédentes, **caractérisé en ce que** celui-ci présente une unité de sélection, pour déterminer l'unité à mémoire prévue pour une communication en écriture/lecture.

9. Procédé de lecture de carte pour des cartes, comprenant une puce à mémoire et une bande magnétique, la carte étant insérée dans un espace de logement en forme de fente, **caractérisée en ce que** la carte est positionnée à une première position, directement sur le bord avant de l'espace de logement en forme de fente, auquel la puce à mémoire peut être lue, et que, si la lecture de la puce à mémoire ne suffit pas, la carte peut continuer à être transportée de la première position dans la direction de l'espace de logement, de manière à pouvoir lire la bande magnétique.
